# EUROPÄISCHE PATENTSCHRIFT

(11) **EP 3 233 324 B1**
(45) Veröffentlichungstag und Bekanntmachung des Hinweises auf die Patenterteilung: **31.10.2018**
(21) Anmeldenummer: 15828476.0
(22) Anmeldetag: 11.12.2015
(51) Int. Cl.: B21D 5/02, B21D 43/00, B21D 43/10

(54) **FERTIGUNGSANLAGE MIT MANIPULATIONSVORRICHTUNG**
PRODUCTION SYSTEM WITH A MANIPULATION DEVICE
INSTALLATION DE FABRICATION AVEC DISPOSITIF DE MANIPULATION

(30) Priorität: 15.12.2014 AT 509032014
(43) Veröffentlichungstag der Anmeldung: 25.10.2017
(73) Patentinhaber: TRUMPF Maschinen Austria GmbH & Co. KG., 4061 Pasching (AT)
(72) Erfinder: KUBINGER, Rudolf, 4720 Kallham (AT); MAYRHOFER, Johann, 4542 Nussbach (AT)
(74) Vertreter: Burger, Hannes
(86) Internationale Anmeldenummer: PCT/AT2015/050315
(87) Internationale Veröffentlichungsnummer: WO 2016/094917

(56) Entgegenhaltungen:
- EP-A2- 2 138 247
- WO-A1-2012/103565
- CH-A5- 668 035
- JP-A- S6 024 229

## Beschreibung

Die Erfindung betrifft eine Fertigungsanlage, insbesondere für das Freiformbiegen von aus Blech oder Platinen zu fertigenden Werkstücken, wie diese im Oberbegriff des Anspruches 1 beschrieben ist.

Bislang war es bekannt, die Verfahrbewegung der Manipulationsvorrichtung relativ bezüglich der Biegemaschine auf Schienen oder anderen körperlich starren Führungsvorrichtungen durchzuführen. Dabei konnte eine ziemlich gute Positioniergenauigkeit der Manipulationsvorrichtung relativ bezüglich der Biegemaschine erzielt werden. Die ortsfeste Halterung der Manipulationsvorrichtung erfolgte dabei an zumindest einer der Schienen. Nachteilig dabei sind die starre Ausführung der Transportwege sowie der zumeist durch die Schienen eingeschränkte freie Arbeitsbereich an der Vorder- bzw. Bedienseite der Biegemaschine. Dokument EP 2 138 247 offenbart eine Fertigungsanlage gemäß dem Oberbegriff des Anspruchs 1.

Der vorliegenden Erfindung liegt die Aufgabe zugrunde, ein Fertigungsanlage, insbesondere für das Freiformbiegen von aus Blech oder Platinen zu fertigenden Werkstücken, zu schaffen, bei welcher die relativ bezüglich der Biegemaschine verfahrbare Manipulationsvorrichtung in einer sich im Bereich der Biegemaschine befindlichen Maschinenbedienstellung bezüglich der Biegemaschine ortsfest positioniert ist. Darüber hinaus soll aber auch für den Bediener zumindest im Bereich einer Vorderseite bzw. Bedienseite an der Biegemaschine ein hindernisloser Arbeitsbereich geschaffen werden. Des Weiteren soll aber auch noch eine flexible Anordnungsmöglichkeit der Transportwege ermöglicht werden.

Diese Aufgabe der Erfindung wird dadurch gelöst, dass an der mindestens einen Manipulationsvorrichtung zumindest ein erstes Kopplungselement angeordnet oder ausgebildet ist und an der zumindest einen Biegemaschine zumindest ein zweites Kopplungselement angeordnet oder ausgebildet ist, und dass die mindestens eine Manipulationsvorrichtung bei einer sich in einer der Maschinenbedienstellungen befindlichen Position derselben das zumindest eine erste Kopplungselement der Manipulationsvorrichtung mit zumindest einem der zweiten Kopplungselemente der Biegemaschine gekoppelt ist und dabei die mindestens eine Manipulationsvorrichtung relativ bezüglich der zumindest einen Biegemaschine ortsfest positioniert und damit eine Referenzposition festgelegt ist.

Die durch die Merkmale des Anspruches 1 erzielten Vorteile liegen darin, dass so einerseits eine kontaktlose bzw. schienenlose Verfahrbewegung der Manipulationsvorrichtung zwischen den einzelnen Komponenten der Fertigungsanlage ermöglicht wird und andererseits trotzdem in der Maschinenbedienstellung eine feststehende, ortsfeste Positionierung der Manipulationsvorrichtung an der Biegemaschine, insbesondere dessen Maschinengestell, erfolgt. Durch die miteinander in Eingriff bringbaren Kopplungselemente kann so durch diese die entsprechende Referenzposition, beispielsweise auf mechanischem Weg, festgelegt werden. Nach dem Entkoppeln der miteinander in Eingriff stehenden Kopplungselemente können von der Manipulationsvorrichtung nach Bedarf selbstständig die entsprechenden Verfahrwege entlang der vorgegebenen bzw. vordefinierten Transportwege durchgeführt werden.

Weiters ist es vorteilhaft, wenn an der Biegemaschine mehrere nebeneinander angeordnete zweite Kopplungselemente vorgesehen sind. Damit kann erreicht werden, dass an der Biegemaschine mehrere Referenzpositionen bevorzugt nebeneinander eindeutig festgelegt werden können. Darüber hinaus können so aber auch mehrere Manipulationsvorrichtungen gleichzeitig nebeneinander in eine entsprechende Maschinenbedienstellung an einer der Biegemaschinen verbracht werden.

Eine andere Ausführungsform zeichnet sich dadurch aus, dass das zweite an der Biegemaschine vorgesehene Kopplungselement durch zumindest eine Kopplungsschiene gebildet ist. Durch die Ausbildung der zweiten Kopplungselemente als Kopplungsschiene können so bei größeren bzw. längeren Biegemaschinen eine Vielzahl von nebeneinander angeordneten Referenzpositionen definiert bzw. festgelegt werden.

Eine weitere mögliche Ausführungsform hat die Merkmale, dass das mindestens erste und das mindestens zweite Kopplungselement in der miteinander gekoppelten Stellung eine mechanisch ausgebildete Kopplungsvorrichtung bilden. Dadurch kann eine mit hoher Präzision herstellbare Referenzposition in der gekoppelten Stellung der Kopplungselemente erzielt werden.

Eine weitere Ausbildung sieht vor, dass von dem an den Werkzeugaufnahmen gehaltenen zumindest einen Biegewerkzeug eine in vertikaler Richtung ausgerichtete sowie sich in Längsrichtung der Werkzeugaufnahmen erstreckende Arbeitsebene definiert ist, und die mehreren nebeneinander angeordneten zweiten Kopplungselemente oder die zumindest eine Kopplungsschiene in einer gleichen Distanz in senkrechter Richtung bezüglich der Arbeitsebene angeordnet sind oder ist. Damit können bezüglich der Arbeitsebene stets mehrere nebeneinander exakt zueinander ausgerichtete Referenzpositionen an der Biegemaschine festgelegt werden.

Eine andere Ausführungsform zeichnet sich dadurch aus, dass die mindestens eine Manipulationsvorrichtung bei sich in einer der Maschinenbedienstellungen befindlichen Position im Bereich einer Vorderseite der zumindest einen Biegemaschine angeordnet ist. Dadurch wird es möglich, nicht nur einen Werkzeugwechsel des Biegewerkzeugs an den Werkzeugaufnahmen durchführen zu können, sondern auch automatisiert und ohne Zutun eines Maschinenbedieners zumeist einfache Biegevorgänge durch die Manipulationsvorrichtung im Zusammenwirken mit der Biegemaschine durchführen zu können.

Eine weitere bevorzugte Ausführungsform ist dadurch gekennzeichnet, dass die mindestens eine Manipulationsvorrichtung bei sich in einer der Maschinenbedienstellungen befindlichen Position mit einer an der zumindest einen Biegemaschine angeordneten Energieversorgungsleitung leitungsverbunden ist. So wird es möglich, in der gekoppelten Stellung die Manipulationsvorrichtung mit entsprechender Energie, beispielsweise elektrischer Energie, zu versorgen. Damit kann beispielsweise eine Aufladung eines Energiespeichers, wie beispielsweise eines Akkus, für den Fahrantrieb oder den Betrieb des Greifarms der Manipulationsvorrichtung erfolgen.

Weiters ist es vorteilhaft, wenn die mindestens eine Manipulationsvorrichtung bei sich in einer der Maschinenbedienstellungen befindlichen Position mit einer an der zumindest einen Biegemaschine angeordneten Datenleitung mit einer Maschinensteuerung und/oder einem Produktionsplanungssystem leitungsverbunden ist. Damit kann bei an der Biegemaschine angedockter Stellung ein Daten- bzw. Programmtransfer von der Biegemaschine bzw. deren Maschinensteuerung oder einem Produktionsplanungssystem hin zur Manipulationsvorrichtung, insbesondere dessen Rechner und/oder Speichervorrichtung erfolgen. So wird es möglich, entsprechende Informationen für die von der Manipulationsvorrichtung durchzuführenden Tätigkeiten an diese zu übermitteln und auch dort abzuspeichern.

Eine andere Ausführungsform zeichnet sich dadurch aus, dass die mindestens eine Manipulationsvorrichtung eine Rechnereinheit und/oder eine Speichereinheit umfasst. Damit wird es möglich direkt an der Manipulationsvorrichtung entsprechende abzuarbeitende Programmschritte abspeichern zu können und diese anschließend von der Manipulationsvorrichtung automatisiert durchführen zu lassen.

Eine weitere mögliche Ausführungsform hat die Merkmale, dass die mindestens eine Manipulationsvorrichtung einen Greifarm mit zumindest einem Greiforgan umfasst, welches zumindest eine Greiforgan mit dem mindestens einen Biegewerkzeug, insbesondere dessen Biegestempel oder Biegegesenk, in eine Halteverbindung bringbar ist. Damit kann einerseits das zu manipulierende Biegewerkzeug aus dem zumindest einen Werkzeugspeicher entnommen, anschließend zur Biegemaschine verbracht, und andererseits an der Biegemaschine ein Werkzeugwechsel in einer der Maschinenbedienstellungen durchgeführt werden.

Eine weitere Ausbildung sieht vor, dass der Greifarm mit seinem zumindest einen Greiforgan in eine das Blech oder die Platine klemmende Halterung bringbar ist. Dies dient unter anderem dazu, um das Blech oder die Platine für den Biegevorgang in das Biegewerkzeug einlegen und nach dem Biegevorgang aus dem Biegewerkzeug entnehmen zu können. Weiters kann so aber auch das Blech oder die Platine aus dem Rohmateriallager entnommen und an der Manipulationsvorrichtung möglicherweise zwischengespeichert werden. Weiters kann damit aber auch ein von der Manipulationsvorrichtung unterstützter oder aber auch von dieser durchgeführter Handlingvorgang im Zuge des Biegevorgangs erfolgen.

Eine andere Ausführungsform zeichnet sich dadurch aus, dass an der mindestens einen Manipulationsvorrichtung ein Zwischenspeicher für das mindestens eine Biegewerkzeug angeordnet oder ausgebildet ist. Durch das Vorsehen zumindest eines Zwischenspeichers wird so die Möglichkeit geschaffen, dass das benötigte Biegewerkzeug oder die Biegewerkzeuge von der Manipulationsvorrichtung aus einem Werkzeugspeicher abgeholt und für den Transport hin zur Biegemaschine an der Manipulationsvorrichtung zwischengespeichert werden kann oder können. Des Weiteren kann so aber auch ein entsprechender Rücktransport von nicht mehr benötigten Biegewerkzeugen von der Biegemaschine hin zum Werkzeugspeicher erfolgen.

Eine weitere bevorzugte Ausführungsform ist dadurch gekennzeichnet, dass an der mindestens einen Manipulationsvorrichtung zumindest eine erste Lagerfläche für das oder die aus dem Blech oder der Platine zu fertigenden Werkstücke angeordnet oder ausgebildet ist. So kann ein Antransport von zu verformenden bzw. biegenden Blechen oder Platinen ebenfalls direkt ohne Zutun einer Bedienperson von der Manipulationsvorrichtung durchgeführt werden.

Weiters ist es vorteilhaft, wenn an der mindestens einen Manipulationsvorrichtung zumindest eine zweite Lagerfläche für das oder die gefertigten Werkstücke angeordnet oder ausgebildet ist. So kann ein automatisiertes Abarbeiten von einfachen Biegevorgängen direkt durch die Manipulationsvorrichtung ermöglicht werden. Die Manipulationsvorrichtung kann beispielsweise so mit ihrem Greifarm und dem daran angeordneten Greiforgan das zu biegende Blech oder die Platine von einer ersten Lagerfläche entnehmen und in den Arbeitsbereich der Biegemaschine verbringen. Während der Durchführung des Biegevorganges kann weiters noch eine entsprechende, klemmende Halterung von der Manipulationsvorrichtung am Blech oder der Platine erfolgen. Ist der Biegevorgang abgeschlossen, kann anschließend von der Manipulationsvorrichtung das gefertigte Werkstück an der dafür vorgesehenen, zweiten Lagerfläche abgelegt werden. Anschließend kann ein selbständiger Abtransport zum Werkstücklager erfolgen.

Eine andere Ausführungsform zeichnet sich dadurch aus, dass die mindestens eine Manipulationsvorrichtung mit zumindest einer optischen Erfassungsvorrichtung ausgestattet ist. Durch das Vorsehen der zumindest einen optischen Erfassungsvorrichtung kann so beispielsweise eine Lageerkennung der zu biegenden bzw. bearbeitenden Bleche erfolgen. Des Weiteren können so aber auch gefertigte Werkstücke erkannt werden. Darüber hinaus wäre es aber auch noch möglich, damit eine entsprechende Erkennung des Biegewerkzeugs bzw. dessen Biegewerkzeugkomponenten zu ermöglichen.

Eine weitere mögliche Ausführungsform hat die Merkmale, dass der zumindest eine Werkzeugspeicher distanziert und räumlich getrennt von der zumindest einen Biegemaschine angeordnet ist. Dadurch kann im Bereich der Biegemaschine auf zusätzliche Anbauten für die Werkzeugspeicherung verzichtet werden. Darüber hinaus kann so aber auch ein Zentrallager für mehrere Biegemaschinen geschaffen werden, um so eine größere Anzahl von Biegemaschinen in einer Fertigungsanlage von einem gemeinsamen Werkzeugspeicher aus mit den jeweils für den Biegevorgang benötigten Biegewerkzeugen versorgen zu können.

Eine weitere Ausbildung sieht vor, dass die Fertigungsanlage zumindest ein Rohmateriallager für die zu biegenden Bleche oder die Platinen umfasst, welches Rohmateriallager bevorzugt distanziert und räumlich getrennt von der zumindest einen Biegemaschine angeordnet ist. Damit kann Stellplatz im Bereich der Biegemaschine eingespart werden, weil durch die Manipulationsvorrichtung ein entsprechender An- bzw. Abtransport ermöglicht wird.

Eine andere Ausführungsform zeichnet sich dadurch aus, dass die Fertigungsanlage zumindest ein Werkstücklager für die aus den Blechen oder den Platinen gefertigten Werkstücke umfasst, welches Werkstücklager bevorzugt distanziert und räumlich getrennt von der zumindest einen Biegemaschine angeordnet ist. Durch das Vorsehen zumindest eines Werkstücklagers kann so ausreichender Freiraum rund um die Biegemaschinen geschaffen werden, wodurch eine höhere Maschinendichte erzielbar ist.

Eine weitere bevorzugte Ausführungsform ist dadurch gekennzeichnet, dass für die Verfahrbewegung der mindestens einen Manipulationsvorrichtung zwischen dem zumindest einen Werkzeugspeicher und der zumindest einen Biegemaschine oder zwischen dem Rohmateriallager und/oder dem Werkstücklager und der zumindest einen Biegemaschine von der mindestens einen Manipulationsvorrichtung entlang der Transportwege eine kontaktlose Führung besteht. Durch das Vorsehen der kontaktlosen Führung der Manipulationsvorrichtung im Bereich der Fertigungsanlage zwischen den einzelnen Anlagenkomponenten derselben kann so eine individuelle Definition bzw. ein Anordnen der Transportwege einfach erfolgen. Weiters kann damit aber auch auf starre Schienensysteme verzichtet werden, welche für das Bedienpersonal, insbesondere in deren Arbeitsbereich an der Biegemaschine störend ist. Damit kann aber auch einfacher auf sich ändernde Transportwege Rücksicht genommen werden, da diese je nach Wahl der kontaktlosen Führung rasch und einfach geändert bzw. umgestaltet werden können.

Schließlich ist es vorteilhaft, wenn die kontaktlose Führung ausgewählt ist aus der Gruppe von Induktionsstreifen, Magnetstreifen, Längsstreifen oder Farbbänder und deren optische Erkennung, GPS Navigation, D-GPS Navigation, Lasernavigation, Data-Matrixcode. Damit wird für den Anwender die Möglichkeit geschaffen, einfach eine kontaktlose Führung bzw. deren Führungsmittel zu wählen und damit diese je nach Bedarf auswählen und einsetzen zu können.

Zum besseren Verständnis der Erfindung wird diese anhand der nachfolgenden Figuren näher erläutert.

Es zeigen jeweils in stark vereinfachter, schematischer Darstellung:
- Fig. 1: eine mögliche Ausbildung einer Fertigungsanlage in Draufsicht;
- Fig. 2: die Biegemaschine mit einer im Bereich ihrer Vorderseite befindlichen Manipulationsvorrichtung, vor dem Andockvorgang der Kopplungselemente, in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben darstellen muss.

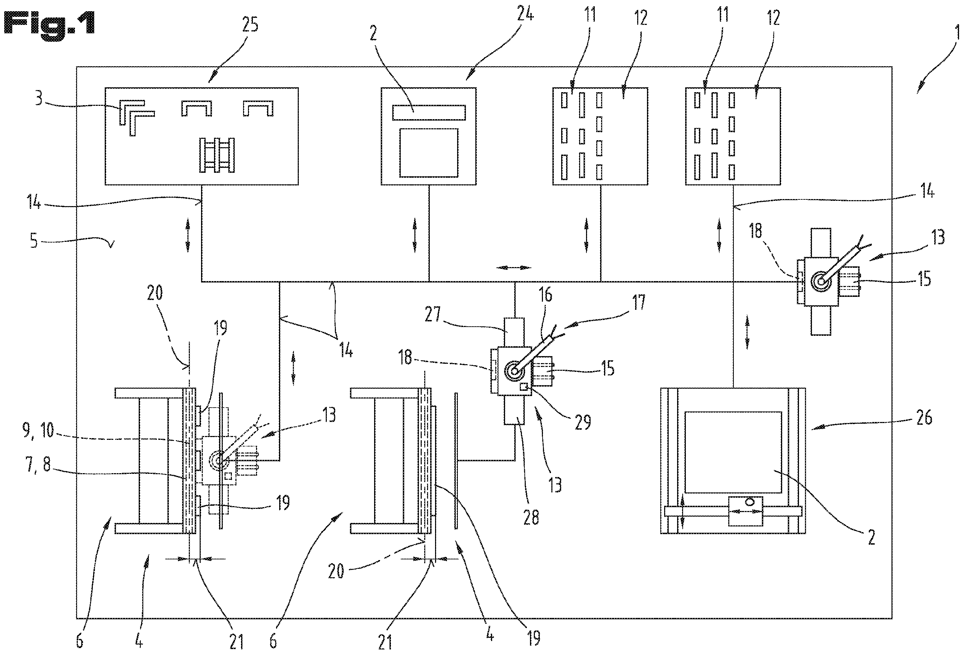

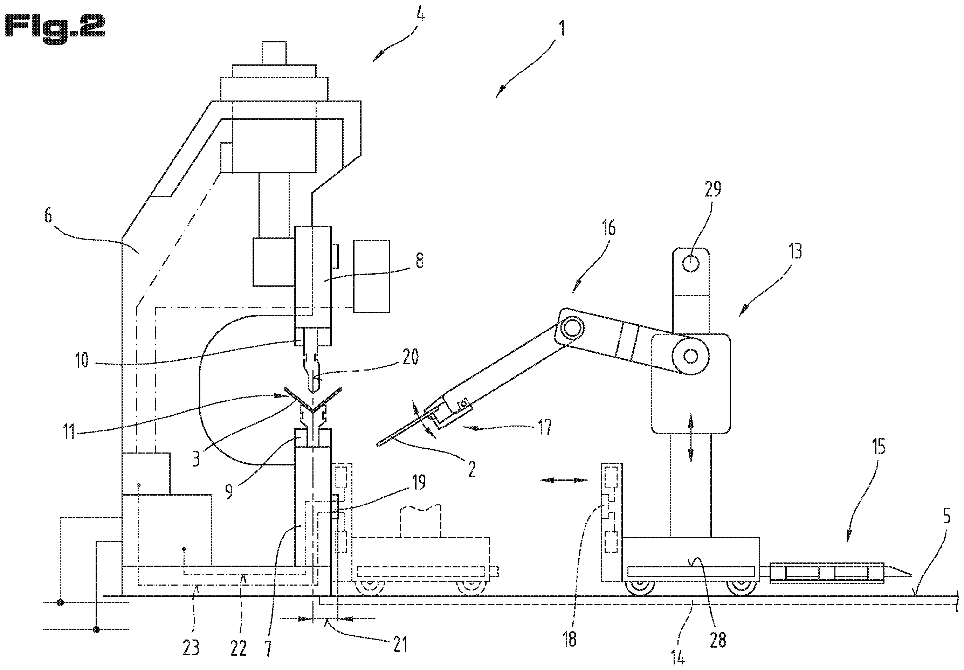

In den Fig. 1 und 2 ist eine Fertigungsanlage 1 von aus Blech 2 oder Platinen zu fertigenden Werkstücken 3 stark vereinfacht schematisch gezeigt. Das Bearbeiten des Blechs 2 oder der Platinen erfolgt in einem Biegevorgang, insbesondere einem sogenannten Freiformbiegen. Für die Darstellung der Fig. 1 wurde eine stilisierte Darstellungsweise im Grundriss bzw. in Draufsicht gewählt.

Die Fertigungsanlage 1 kann mehrere Komponenten umfassen, von denen einige derselben nachfolgend näher beschrieben und bezeichnet werden. Es ist grundsätzlich möglich, dass einzelne der Anlagenkomponenten untereinander beliebig miteinander kombiniert werden können sowie deren örtliche Anordnung zueinander beliebig gewählt werden kann.

So kann die Fertigungsanlage 1 zumindest eine aber auch mehrere Biegemaschinen 4 umfassen, welche beispielsweise in einer Werkshalle oder einem anderen Gebäude auf einem Hallenboden 5 aufgestellt bzw. angeordnet sind. Beim Hallenboden 5 handelt es ich zumeist um eine in einer Ebene angeordnete oder bevorzugt ebenflächig ausgebildete Aufstandsfläche. Je nach Belastung bzw. Eigengewicht kann es noch möglich sein, dass Bauteile bzw. Maschinen mit einer hohen Eigenmasse auf einem eigenen dafür vorgesehenen Fundament abgestützt sind. Bei der Biegemaschine 4 kann es sich beispielsweise um eine Biegepresse, insbesondere eine Abkantpresse handeln. Die Biegemaschine 4 umfasst zumindest ein Maschinengestell 6 mit zumeist einem feststehenden unteren Pressbalken 7 sowie einem relativ dazu in vertikaler Richtung verstellbaren oberen Pressbalken 8, wie dies allgemein bekannt ist. Weiters ist hier noch vereinfacht dargestellt, dass jeweils an den Pressbalken 7, 8 daran angeordnete oder ausgebildete Werkzeugaufnahmen 9, 10 ausgebildet bzw. vorgesehen sind. Die Werkzeugaufnahmen 9, 10 sind durch strichlierte Linien angedeutet.

Zur Durchführung des Biegevorgangs umfasst die Fertigungsanlage 1 weiters zumindest ein Biegewerkzeug 11, welches in bekannter Weise durch mindestens einen Biegestempel und mindestens ein damit zusammenwirkendes Biegegesenk gebildet ist. Da dies ebenfalls hinlänglich bekannt ist, wird hier nicht mehr näher auf die detaillierte Ausbildung des Biegewerkzeugs 11 eingegangen.

Weiters umfasst die Fertigungsanlage 1 zumindest einen Werkzeugspeicher 12 für das oder die Biegewerkzeuge 11. Der oder die Werkzeugspeicher 12 dienen dazu, die für die jeweiligen Biege- bzw. Umformvorgänge notwendigen Biegewerkzeuge 11 zu bevorraten und bei Bedarf zur Abholung bereit zu stellen. Zumeist werden hier mehrere bevorzugt zueinander unterschiedliche Biegewerkzeuge 11 bzw. deren Biegewerkzeugkomponenten gelagert.

Die zuvor beschriebenen Werkzeugaufnahmen 9, 10 an den jeweiligen Pressbalken 7, 8 dienen zur Halterung für das mindestens eine Biegewerkzeug 11.

Weiters umfasst die Fertigungsanlage 1 bei diesem Ausführungsbeispiel mindestens eine Manipulationsvorrichtung 13. Die Manipulationsvorrichtung 13 ist bei diesem hier gezeigten Ausführungsbeispiel frei selbstfahrend ausgebildet und führt somit die Verfahrbewegungen, beispielsweise zwischen der zumindest einen Biegemaschine 4 und dem zumindest einen Werkzeugspeicher 12 oder anderer nachträglich noch beschriebenen Stationen oder Lagern durch. Ein möglicher Transportweg 14 oder mehrere derselben sind vereinfacht mit Strichen zwischen den einzelnen Komponenten der Fertigungsanlage 1 angedeutet und können, je nach Ausbildung, beispielsweise direkt am Hallenboden 5 verlaufend angeordnet oder ausgebildet sein. Der Transportweg 14 kann auch als Transportstrecke oder Verfahrweg bezeichnet werden.

Ist beispielsweise ein Biegewerkzeug 11 bzw. ein Werkzeugsatz von einem der Werkzeugspeicher 12 hin zu einer der Biegemaschinen 4 zu verbringen bzw. transportieren, verfährt die Manipulationsvorrichtung 13 entlang des vordefinierten Transportweges 14 mittels einer kontaktlosen Führung entlang des vordefinierten Transportweges 14.

Bevorzugt wird der Hallenboden 5 vollständig ebenflächig ausgebildet, um so eine zumindest im Bereich des oder der Transportwege 14 ungehinderte schienenlose Verfahrbewegung der zumindest einen Manipulationsvorrichtung 13 zu ermöglichen. Der Antrieb der Manipulationsvorrichtung 13 kann beispielsweise durch zumindest ein Antriebsrad und einem damit in Antriebsverbindung stehenden Antriebsaggregat erfolgen. Anstelle von Antriebsrädern können auch Antriebsrollen, Antriebswalzen oder ähnliche Antriebsorgane, wie beispielsweise Antriebsketten oder dergleichen Anwendung finden.

Befindet sich die Manipulationsvorrichtung 13 im Nahbereich eines der Werkzeugspeicher 12 zur Entnahme und/oder Rückgabe von Biegewerkzeugen, kann diese Stellung der Manipulationsvorrichtung 13 als Werkzeugspeicherstellung bezeichnet werden. In dieser Werkzeugspeicherstellung kann nicht nur die Übernahme zumindest eines Biegewerkzeugs 11 und/oder Werkzeugsatzes vom Werkzeugspeicher 12 hin auf die Manipulationsvorrichtung 13 sondern auch eine Rückgabe bzw. ein Einlagern des Biegewerkzeugs 11 von der Manipulationsvorrichtung 13 in den Werkzeugspeicher 12 erfolgen bzw. durchgeführt werden kann. Für die Aufnahme des Biegewerkzeuges 11 kann an der mindestens einen Manipulationsvorrichtung 13 ein Zwischenspeicher 15 für das mindestens eine Biegewerkzeug 11 angeordnet oder ausgebildet sein.

Für die Durchführung dieser Manipulationsbewegungen des Biegewerkzeugs 11 kann die mindestens eine Manipulationsvorrichtung 13 einen Greifarm 16 mit zumindest einem bevorzugt zangenförmig ausgebildeten Greiforgan 17 umfassen. Damit wird es der Manipulationsvorrichtung 13 möglich, durch entsprechende Steuer- bzw. Regelbefehle mittels des Greiforgans 17 das mindestens eine Biegewerkzeug 11, insbesondere dessen Biegestempel oder Biegegesenk, entsprechend aufnehmen, halten, manipulieren und abgeben zu können. Um diese Manipulationsvorgänge steuern und/oder regeln zu können, kann die mindestens eine Manipulationsvorrichtung 13 auch noch eine Rechnereinheit und/oder eine Speichereinheit umfassen.

Ist das oder sind die Biegewerkzeuge 11 von der Manipulationsvorrichtung 13 aufgenommen, führt die Manipulationsvorrichtung 13 die Verfahrbewegung von der im Bereich des Werkzeugspeichers 12 befindlichen Werkzeugspeicherstellung entlang des Transportwegs 14 hin zu einer im Bereich der Biegemaschine 4 befindliche Maschinenbedienstellung durch. Damit kann das Biegewerkzeug 11, ausgehend vom Werkzeugspeicher 12, hin zur Biegemaschine 4, insbesondere deren Werkzeugaufnahmen 9, 10, verbracht werden.

Wie bereits zuvor kurz beschrieben, erfolgt die Verfahrbewegung der mindestens einen Manipulationsvorrichtung 13 zwischen dem zumindest einen Werkzeugspeicher 12 und der zumindest einen Biegemaschine 4 entlang des oder der Transportwege mittels einer kontaktlosen Führung. So kann beispielsweise die kontaktlose Führung ausgewählt sein aus der Gruppe von Induktionsstreifen, Magnetstreifen, Längsstreifen oder Farbbänder und deren optische Erkennung, GPS Navigation, D-GPS Navigation (Differential Global Positioning System), Lasernavigation, Data-Matrixcode. Die unterschiedlich ausgebildeten Streifen können je nach Bedarf auf dem Hallenboden 5 befestigt, insbesondere aufgeklebt, werden. Da diese zumeist eine eher sehr geringe Dicke bzw. Stärke aufweisen, sind diese auch nicht störend für den Verfahrbetrieb der Manipulationsvorrichtung 13 sowie das Bedienungspersonal. Es wäre auch noch möglich, die kontaktlosen Führungs- bzw. Leitelemente vertieft im Hallenboden 5 anzuordnen, wodurch ein besserer Schutz derselben vor Zerstörung oder dgl. erzielt werden kann.

Damit kann im Bereich des Hallenbodens 5 auf die Anordnung von eigenen, körperlich höher ausgebildeten Führungsschienen oder anderen mechanischen Führungsvorrichtungen verzichtet werden, welche das Niveau des Hallenbodens 5 überragen. So kann ein nahezu bis vollständig ebenflächiger Hallenboden bzw. eine ebenflächige Aufstandsfläche ohne störende und darüber vorragende Bauteile für die kontaktlose Führung der Manipulationsvorrichtung 13 geschaffen werden.

Ist nun von der zumindest einen Manipulationsvorrichtung 13 die zumindest eine im Bereich der Biegemaschine 4 befindliche Maschinenbedienstellung entlang des Transportwegs 14 erreicht worden, ist die Manipulationsvorrichtung 13 in einer entsprechenden Referenzposition bezüglich der Biegemaschine 4 ortsfest positioniert zu halten. Dazu ist vorgesehen, dass an der mindestens einen Manipulationsvorrichtung 13 zumindest ein erstes Kopplungselement 18 angeordnet oder ausgebildet ist. An der zumindest einen Biegemaschine 4 ist weiters zumindest ein zweites Kopplungselement 19 daran angeordnet oder ausgebildet. An der im linken unteren Bereich der Fertigungsanlage 1 dargestellten Biegemaschine 4 ist gezeigt, dass an der Biegemaschine 4 mehrere nebeneinander angeordnete zweite Kopplungselemente 19 vorgesehen sein können. Je nach Längserstreckung der Biegemaschine 4 in Längsrichtung der Werkzeugaufnahme 9, 10 gesehen, kann beispielsweise auch mit nur einem zweiten Kopplungselement 19 das Auslangen gefunden werden.

Bei der unteren in der Mitte dargestellten Biegemaschine 4 ist noch vereinfacht dargestellt, dass das zweite an der Biegemaschine 4 vorgesehene Kopplungselement 19 beispielsweise durch zumindest eine Kopplungsschine gebildet ist. Dabei ist die Kopplungsschiene bevorzugt durchgängig ausgebildet und ermöglicht somit eine Vielzahl von in Richtung deren Längserstreckung gesehen, mehreren nebeneinander angeordneten Maschinenbedienstellungen für die mindestens eine Manipulationsvorrichtung 13. Zur ortsfesten Positionierung und dem damit verbundenen Festlegen der Referenzposition der Manipulationsvorrichtung 13 bezüglich der Biegemaschine 4 ist das zumindest eine erste Kopplungselement 18 der Manipulationsvorrichtung 13 mit zumindest einem der zweiten Kopplungselemente 19 der Biegemaschine 4 gekoppelt.

Dabei bildet das mindestens erste Kopplungselement 18 und das mindestens zweite Kopplungselement 19 in der miteinander gekoppelten Stellung eine bevorzugt mechanisch ausgebildete Kopplungsvorrichtung aus. Durch die Ausbildung der Kopplungsvorrichtung wird eine exakte vorpositionierte, ortsfeste Positionierung der Manipulationsvorrichtung 13 in deren Maschinenbedienstellung erzielt. Die zusammenwirkenden Kopplungselemente 18, 19 können unterschiedlichst ausgebildet sein, wobei eine ortsfeste Positionierung und das damit verbundene Festlegen der Referenzposition der Manipulationsvorrichtung 13 bezüglich der Biegemaschine 4 damit erfolgt. Die Kopplungselemente 18, 19 können auf mechanischer Basis, oder aber auch elektro-mechanisch oder auf magnetischer Wirkung beruhend ausgebildet sein.

Des Weiteren ist noch bei der links unten dargestellten Biegemaschine 4 gezeigt, dass von dem an den Werkzeugaufnahmen 9, 10 gehaltenen mindestens einen Biegewerkzeug 11 eine in vertikaler Richtung ausgerichtete sowie sich in Längsrichtung der Werkzeugaufnahmen 9, 10 erstreckende Arbeitsebene 20 definiert ist. Dabei können den ersten Kopplungselementen 18 zugewendete Kopplungsflächen der zweiten Kopplungselemente 19 oder die zumindest eine Kopplungsschiene in einer gleichen Distanz 21 in senkrechter Richtung bezüglich der Arbeitsebene 20 davon angeordnet oder ausgebildet sein.

Um eine Zugänglichkeit der Manipulationsvorrichtung 13, insbesondere dessen Greifarm 16 zu den Werkzeugaufnahmen 9, 10 zu ermöglichen, ist die mindestens eine Manipulationsvorrichtung 13 bei sich in einer der Maschinenbedienstellungen befindlichen Position im Bereich einer Vorderseite der zumindest einen Biegemaschine 4 angeordnet. Die Vorderseite der Biegemaschine 4 ist dabei jene Seite, welche auch für den Maschinenbediener für seine Arbeitstätigkeit vorgesehen ist. Um eine Verfahrbewegung der Manipulationsvorrichtung 13 zur Erzielung unterschiedlicher Maschinenbedienstellungen an der Biegemaschine 4 zu ermöglichen, kann der Transportweg 14 sich auch noch in paralleler Richtung bezüglich der Arbeitsebene 20 erstreckend definiert oder angeordnet sein. Da auch das mindestens zweite Kopplungselement 19 im Bereich der Vorderseite der Biegemaschine 4 angeordnet ist, kann so von der Manipulationsvorrichtung 13 nicht nur ein Wechsel bzw. ein Tausch von Biegewerkzeugen 11 an den Werkzeugaufnahmen 9, 10 durchgeführt werden, sondern auch mögliche einfache Biegevorgänge im Zusammenwirken mit der Biegemaschine 4 automatisch selbsttätig durchgeführt werden.

In der Fig. 2 ist die Manipulationsvorrichtung 13 in einer im Bereich der Vordersite bzw. Bedienseite der Biegemaschine 4 vor dem Andocken bzw. Koppeln an der Biegemaschine 4 gezeigt. Die gekoppelte Stellung ist nur in strichlierten Linien angedeutet, wobei nur ein Teil der Manipulationsvorrichtung 13 dargestellt worden ist. Zur Durchführung von Rüst- bzw. Umrüstvorgängen sowie möglichen maschinell unterstützten Biegearbeiten, ist die Manipulationsvorrichtung 13 in die Maschinenbedienstellung zu verbringen bzw. zu verfahren und auch anzukoppeln. Der von der oder den ortsfest am Hallenboden 5 angeordneten kontaktlos ausgebildeten Führungselementen zur Bildung bzw. Definition des oder der Transportweg 14 sind diese in strichlierten Linien versenkt im Hallenboden 5 angedeutet.

So kann die mindestens eine Manipulationsvorrichtung 13 bei sich in einer der Maschinenbedienstellungen befindlichen und daran angedockten Position mit einer an der zumindest einen Biegemaschine 4 angeordneten Energieversorgungsleitung 22 leitungsverbunden sein. Weiters und unabhängig davon wäre es aber auch noch möglich, dass die mindestens eine Manipulationsvorrichtung 13 bei sich in einer der Maschinenbedienstellung befindlichen Position mit einer an der zumindest einen Biegemaschine 4 angeordneten Datenleitung 23 mit einer nicht näher dargestellten Maschinensteuerung und/oder einem Produktionsplanungssystem leitungsverbunden ist.

Weiters ist noch vereinfacht dargestellt - siehe Fig. 1 - dass die Fertigungsanlage 1 auch noch zumindest ein Rohmateriallager 24 für die zu biegenden Bleche 2 oder die Platinen umfassen kann. Dabei ist das Rohmateriallager 24 bevorzugt distanziert und räumlich getrennt von der zumindest einen Biegemaschine 4 im Bereich der Fertigungshalle oder einem anderen Gebäude angeordnet. Des Weiteren ist es auch noch möglich, dass die Fertigungsanlage 1 auch noch zumindest ein Werkstücklager 25 für die aus den Blechen 2 oder den Platinen gefertigten Werkstücke 3 nach deren Bearbeitung durch die Biegemaschine 4 umfassen kann. Auch dieses Werkstücklager 25 kann bevorzugt distanziert und räumlich getrennt von der zumindest einen Biegemaschine 4 angeordnet sein.

Zusätzlich wäre es auch noch möglich, dass die Fertigungsanlage 1 auch noch eine Konfektioniervorrichtung 26, beispielsweise für den Zuschnitt der Bleche 2 oder Platinen zur Bildung der Werkstücke 3, umfassen kann. All die zuvor beschriebenen Komponenten der Fertigungsanlage 1, nämlich die zumindest eine Biegemaschine 4, der zumindest eine Werkzeugspeicher 12, das zumindest eine Rohmateriallager 24, das zumindest eine Werkstücklager 25 sowie die zumindest eine Konfektioniervorrichtung 26, können untereinander bzw. miteinander durch die zuvor beschriebenen und ggf. unterschiedlich ausgebildeten Transportwege 14 verbunden sein, um so entlang dieser eine kontaktlose Führung zu ermöglichen. Damit kann auch die Verfahrbewegung der mindestens einen Manipulationsvorrichtung 13 auch zwischen der zumindest einen Biegemaschine 4 und dem Rohmateriallager 24 und/oder dem Rohmateriallager 24 und/oder dem Werkstücklager 25 entlang der vordefinierten Transportwege 14 erfolgen.

Um auch den Transport für das oder die für die Herstellung bzw. Fertigung der Werkstücke 3 vorgesehenen Bleche 2 oder Platinen zu ermöglichen, kann an der mindestens einen Manipulationsvorrichtung 13 zumindest eine erste Lagerfläche 27 daran angeordnet oder ausgebildet sein. Es ist nicht nur eine auflagernde Lagerung sondern auch eine hängende Lagerung denkbar. Unabhängig davon oder zusätzlich dazu wäre es aber auch noch möglich, dass an der mindestens einen Manipulationsvorrichtung 13 zumindest eine zweite Lagerfläche 28 für das oder die gefertigten Werkstücke 3 daran angeordnet oder ausgebildet sein kann. Unter Lagerfläche wird hier verstanden, dass es sich je nach räumlicher Ausgestaltung und Größe bzw. Abmessung der Bleche 2 und/oder der Werkstücke 3 um einen Abstell- bzw. Transportplatz handeln kann. Die erste Lagerfläche 27 und/oder die zweite Lagerfläche 28 können beispielsweise durch fix an der Manipulationsvorrichtung 13 angeordnete Stellflächen gebildet sein. Es wäre aber auch möglich, zumindest eine entsprechende Aufnahme, beispielsweise für Paletten, Kisten oder dgl. in Form von Gabelzinken, wie diese bei Gabelstaplern Anwendung finden, an der Manipulationsvorrichtung 13 vorzusehen. Damit kann die erste Lagerfläche 27 und/oder die zweite Lagerfläche 28 und/oder der Zwischenspeicher 15 nur durch entsprechende Gabelzinken gebildet sein, von welchen in bekannter Weise beispielsweise Paletten oder andere Tragvorrichtungen aufgenommen und transportiert werden können. Es wäre aber auch noch möglich, nur einen einzigen Speicher- bzw. Abstellplatz für die Bleche 2, die daraus hergestellten Werkstücke 3 sowie die Biegewerkzeuge 11 an der Manipulationsvorrichtung 13 vorzusehen bzw. anzuordnen.

Zur Hantierung bzw. dem Handling des Bleches 2 oder der Platine und/oder dem oder den daraus hergestellten Werkstücken 3 kann der Greifarm 16 mit seinem zumindest einen Greiforgan 17 in eine das Blech 2 oder das Werkstück 3 klemmende Halterung verbracht werden.

Wie aus der Darstellung in der Fig. 1 auch noch weiters zu ersehen ist, kann nicht nur das Rohmateriallager 24 und/oder das Werkstücklager 25 distanziert und räumlich getrennt von der Biegemaschine 4 angeordnet sein, sondern dies trifft auch für den oder die Werkzeugspeicher 12 und/oder die Konfektioniervorrichtung 26 zu.

Weiters wäre es aber auch noch möglich, dass die mindestens eine Manipulationsvorrichtung 13 mit zumindest einer Erfassungsvorrichtung 29, insbesondere einer optischen Erfassungsvorrichtung, ausgestattet ist. Damit wird es möglich, eine Lageerkennung für die aufzunehmenden und/oder transportierenden Bleche 2, die daraus gefertigten Werkstücke 3 und/oder das Biegewerkzeug 11 durchführen zu können.

Zusätzlich oder unabhängig davon wäre es auch noch möglich, eine Reinigungsvorrichtung bzw. ein Reinigungssystem an der Manipulationsvorrichtung 13 anzuordnen bzw. vorzusehen. Das Reinigungssystem kann dazu eingesetzt werden, um damit insbesondere regelmäßige Reinigungsvorgänge an den einzelnen Werkzeugkomponenten des Biegewerkzeugs 11 und/oder den Werkzeugaufnahme 9, 10 durchführen zu können.

Durch die Ausbildung der Manipulationsvorrichtung 13 als selbstfahrende Komponente der Fertigungsanlage 1, könnte diese auch noch mit einem Sicherheitssystem ausgestattet werden. Dabei kann es sich beispielsweise um einen Laserscanner handeln, mit welchen rund um die Manipulationsvorrichtung 13 unterschiedliche Sicherheitszonen festgelegt bzw. definiert werden können. So könnte eine außen liegende Sicherheitszone dazu dienen, beispielsweise die Fahrgeschwindigkeit der Manipulationsvorrichtung 13 zu verringern, um damit beispielsweise eine Kollision zu vermeiden. Dringt hingegen ein Fremdkörper in die näher liegende Sicherheitszone bzw. einen kleineren Bereich ein, kann die Verfahrbewegung der Manipulationsvorrichtung 13 gestoppt werden. Darüber hinaus wäre es aber auch noch möglich einen Signalton abzugeben.

Damit wird auch noch die Möglichkeit geschaffen, an bestehenden Biegeanlagen bzw. Fertigungsanlagen 1 durch das Definieren bzw. Vorsehen der Transportwege 14 und das Anbringen der Kopplungselemente 18, 19 einfach eine Nachrüstung bei bestehenden Anlagen durchführen zu können.

Weiters können so aber auch außerhalb der Produktionszeiten entsprechende Umrüstvorgänge oder sogar einfache Biegevorgänge automatisiert von der Manipulationsvorrichtung 13 durchgeführt werden. Damit findet ein Maschinenbediener bereits bei seinem Arbeitsbeginn eine mit dem Biegewerkzeug 11 für den oder die Biegevorgänge gerüstete Biegemaschine 4 vor. Seine teure Arbeitszeit kann dadurch eingespart und auch die ansonsten durchzuführenden Rüstvorgänge können nach entsprechender Datenübertragung auf die Manipulationsvorrichtung 13 von dieser ohne Zutun durchgeführt werden.

Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus der Fertigungsanlage 1 diese bzw. deren Bestandteile oder Bauteilkomponenten teilweise unmaßstäblich und/oder vergrößert und/oder verkleinert dargestellt wurden.

### Bezugszeichenaufstellung

- 1: Fertigungsanlage
- 2: Blech
- 3: Werkstück
- 4: Biegemaschine
- 5: Hallenboden
- 6: Maschinengestell
- 7: Pressbalken
- 8: Pressbalken
- 9: Werkzeugaufnahme
- 10: Werkzeugaufnahme
- 11: Biegewerkzeug
- 12: Werkzeug speicher
- 13: Manipulationsvorrichtung
- 14: Transportweg
- 15: Zwischenspeicher
- 16: Greifarm
- 17: Greiforgan
- 18: erstes Kopplungselement
- 19: zweites Kopplungselement
- 20: Arbeitsebene
- 21: Distanz
- 22: Energieversorgungsleitung
- 23: Datenleitung
- 24: Rohmateriallager
- 25: Werkstücklager
- 26: Konfektioniervorrichtung
- 27: erste Lagerfläche
- 28: zweite Lagerfläche
- 29: Erfassungsvorrichtung

## Patentansprüche

1. Fertigungsanlage (1), insbesondere für das Freiformbiegen von aus Blech (2) oder Platinen zu fertigenden Werkstücken (3), umfassend mindestens ein Biegewerkzeug (11), welches mindestens eine Biegewerkzeug (11) mindestens einen Biegestempel und mindestens ein Biegegesenk umfasst; zumindest einen Werkzeugspeicher (12) für mehrere der Biegewerkzeuge (11); zumindest eine Biegemaschine (4), insbesondere eine Biegepresse, mit einem Maschinengestell (6) und Pressbalken (7, 8) sowie jeweils an den Pressbalken (7, 8) angeordneten oder ausgebildeten Werkzeugaufnahmen (9, 10) für das mindestens eine Biegewerkzeug (11); mindestens (11) eine Manipulationsvorrichtung (13), mittels welcher das mindestens eine Biegewerkzeug (11) durch eine von der Manipulationsvorrichtung (13) durchgeführte Verfahrbewegung von einer im Bereich des Werkzeugspeichers (12) befindlichen Werkzeugspeicherstellung entlang eines Transportwegs (14) in zumindest eine im Bereich der Biegemaschine (4) befindliche Maschinenbedienstellung zwischen dem Werkzeugspeicher (12) und der Biegemaschine (4), insbesondere deren Werkzeugaufnahmen (9, 10), verbracht ist; **dadurch gekennzeichnet, dass** an der mindestens einen Manipulationsvorrichtung (13) zumindest ein erstes Kopplungselement (18) angeordnet oder ausgebildet ist und an der zumindest einen Biegemaschine (4) zumindest ein zweites Kopplungselement (19) angeordnet oder ausgebildet ist, und dass die mindestens eine Manipulationsvorrichtung (13) bei einer sich in einer der Maschinenbedienstellungen befindlichen Position derselben das zumindest eine erste Kopplungselement (18) der Manipulationsvorrichtung (13) mit zumindest einem der zweiten Kopplungselemente (19) der Biegemaschine (4) gekoppelt ist und dabei die mindestens eine Manipulationsvorrichtung (13) relativ bezüglich der zumindest einen Biegemaschine (4) ortsfest positioniert und damit eine Referenzposition festgelegt ist.

2. Fertigungsanlage (1) nach Anspruch 1, **dadurch gekennzeichnet, dass** an der Biegemaschine (4) mehrere nebeneinander angeordnete zweite Kopplungselemente (19) vorgesehen sind.

3. Fertigungsanlage (1) nach Anspruch 1 oder 2, **dadurch gekennzeichnet, dass** das zweite an der Biegemaschine (4) vorgesehene Kopplungselement (19) durch zumindest eine Kopplungsschiene gebildet ist.

4. Fertigungsanlage (1) nach einem der vorhergehenden Ansprüche, **dadurch gekennzeichnet, dass** das mindestens erste Kopplungselement (18) und das mindestens zweite Kopplungselement (19) in der miteinander gekoppelten Stellung eine mechanisch ausgebildete Kopplungsvorrichtung bilden.

5. Fertigungsanlage (1) nach einem der vorhergehenden Ansprüche, **dadurch gekennzeichnet, dass** von dem an den Werkzeugaufnahmen (9, 10) gehaltenen zumindest einen Biegewerkzeug (11) eine in vertikaler Richtung ausgerichtete sowie sich in Längsrichtung der Werkzeugaufnahmen (9, 10) erstreckende Arbeitsebene (20) definiert ist, und die mehreren nebeneinander angeordneten zweiten Kopplungselemente (19) oder die zumindest eine Kopplungsschiene in einer gleichen Distanz (21) in senkrechter Richtung bezüglich der Arbeitsebene (20) angeordnet sind oder ist.

6. Fertigungsanlage (1) nach einem der vorhergehenden Ansprüche, **dadurch gekennzeichnet, dass** die mindestens eine Manipulationsvorrichtung (13) bei sich in einer der Maschinenbedienstellungen befindlichen Position im Bereich einer Vorderseite der zumindest einen Biegemaschine (4) angeordnet ist.

7. Fertigungsanlage (1) nach einem der vorhergehenden Ansprüche, **dadurch gekennzeichnet, dass** die mindestens eine Manipulationsvorrichtung (13) bei sich in einer der Maschinenbedienstellungen befindlichen Position mit einer an der zumindest einen Biegemaschine (4) angeordneten Energieversorgungsleitung (22) leitungsverbunden ist.

8. Fertigungsanlage (1) nach einem der vorhergehenden Ansprüche, **dadurch gekennzeichnet, dass** die mindestens eine Manipulationsvorrichtung (13) bei sich in einer der Maschinenbedienstellungen befindlichen Position mit einer an der zumindest einen Biegemaschine (4) angeordneten Datenleitung (23) mit einer Maschinensteuerung und/oder einem Produktionsplanungssystem leitungsverbunden ist.

9. Fertigungsanlage (1) nach einem der vorhergehenden Ansprüche, **dadurch gekennzeichnet, dass** die mindestens eine Manipulationsvorrichtung (13) eine Rechnereinheit und/oder eine Speichereinheit umfasst.

10. Fertigungsanlage (1) nach einem der vorhergehenden Ansprüche, **dadurch gekennzeichnet, dass** die mindestens eine Manipulationsvorrichtung (13) einen Greifarm (16) mit zumindest einem Greiforgan (17) umfasst, welches zumindest eine Greiforgan (17) mit dem mindestens einen Biegewerkzeug (11), insbesondere dessen Biegestempel oder Biegegesenk, in eine Halteverbindung bringbar ist.

11. Fertigungsanlage (1) nach Anspruch 10, **dadurch gekennzeichnet, dass** der Greifarm (16) mit seinem zumindest einen Greiforgan (17) in eine das Blech (2) oder die Platine klemmende Halterung bringbar ist.

12. Fertigungsanlage (1) nach einem der vorhergehenden Ansprüche, **dadurch gekennzeichnet, dass** an der mindestens einen Manipulationsvorrichtung (13) ein Zwischenspeicher (15) für das mindestens eine Biegewerkzeug (11) angeordnet oder ausgebildet ist.

13. Fertigungsanlage (1) nach einem der vorhergehenden Ansprüche, **dadurch gekennzeichnet, dass** an der mindestens einen Manipulationsvorrichtung (13) zumindest eine erste Lagerfläche (27) für das oder die Bleche (2) oder die Platinen angeordnet oder ausgebildet ist.

14. Fertigungsanlage (1) nach einem der vorhergehenden Ansprüche, **dadurch gekennzeichnet, dass** an der mindestens einen Manipulationsvorrichtung (13) zumindest eine zweite Lagerfläche (28) für das oder die gefertigten Werkstücke (3) angeordnet oder ausgebildet ist.

15. Fertigungsanlage (1) nach einem der vorhergehenden Ansprüche, **dadurch gekennzeichnet, dass** die mindestens eine Manipulationsvorrichtung (13) mit zumindest einer optischen Erfassungsvorrichtung (29) ausgestattet ist.

16. Fertigungsanlage (1) nach einem der vorhergehenden Ansprüche, **dadurch gekennzeichnet, dass** der zumindest eine Werkzeugspeicher (12) distanziert und räumlich getrennt von der zumindest einen Biegemaschine (4) angeordnet ist.

17. Fertigungsanlage (1) nach einem der vorhergehenden Ansprüche, **dadurch gekennzeichnet, dass** diese zumindest ein Rohmateriallager (24) für die zu biegenden Bleche (2) oder die Platinen umfasst, welches Rohmateriallager (24) bevorzugt distanziert und räumlich getrennt von der zumindest einen Biegemaschine (4) angeordnet ist.

18. Fertigungsanlage (1) nach einem der vorhergehenden Ansprüche, **dadurch gekennzeichnet, dass** diese zumindest ein Werkstücklager (25) für die aus den Blechen (2) oder den Platinen gefertigten Werkstücke (3) umfasst, welches Werkstücklager (25) bevorzugt distanziert und räumlich getrennt von der zumindest einen Biegemaschine (4) angeordnet ist.

19. Fertigungsanlage (1) nach einem der vorhergehenden Ansprüche, **dadurch gekennzeichnet, dass** für die Verfahrbewegung der mindestens einen Manipulationsvorrichtung (13) zwischen dem zumindest einen Werkzeugspeicher (12) und der zumindest einen Biegemaschine (4) oder zwischen dem Rohmateriallager (24) und/oder dem Werkstücklager (25) und der zumindest einen Biegemaschine (4) von der mindestens einen Manipulationsvorrichtung (13) entlang der Transportwege (14) eine kontaktlose Führung besteht.

20. Fertigungsanlage (1) nach Anspruch 19, **dadurch gekennzeichnet, dass** die kontaktlose Führung ausgewählt ist aus der Gruppe von Induktionsstreifen, Magnetstreifen, Längsstreifen oder Farbbänder und deren optische Erkennung, GPS Navigation, D-GPS Navigation, Lasernavigation, Data-Matrixcode.

## Claims

1. Production system (1), in particular for the free-form bending of work pieces (3) to be manufactured out of sheet metal (2) or plates, comprising at least one bending tool (11), which at least one bending tool (11) comprises at least one bending punch and at least one bending die; at least one tool store (12) for multiple bending tools (11); at least one bending machine (4), in particular a bending press with a machine frame (6) and press beams (7, 8) and tool sockets (9, 10) arranged or constructed on the press beams (7, 8) for the at least one bending tool (11); at least one manipulation device (13) by which the at least one bending tool (11) is moved by a travelling movement executed by the manipulation device (13) from a tool store position located in the region of the tool store (12) along a transport path (14) to at least one machine operating position located in the region of the bending machine (4) between the tool store (12) and the bending machine (4), in particular its tool sockets (9, 10); **characterised by** the at least one manipulation device (13) having arranged or constructed on it at least one first coupling element (18) and the at least one bending machine (4) having arranged or constructed on it at least one second coupling element (19), and that the at least one manipulation device (13), when in one of the machine operating positions, has coupled the at least one first coupling element (18) of the manipulation device (13) to at least one of the second coupling elements (19) of the bending machine (4) and in this way the at least one manipulation device (13) is fixed in position relative to the at least one bending machine (4) and thus a reference position is set.

2. Production system (1) as in claim 1, **characterised by** the bending machine (4) having multiple second coupling elements (19) arranged next to each other.

3. Production system (1) as in claim 1 or 2, **characterised by** the second coupling element (19) placed on the bending machine (4) being formed by at least one coupling rail.

4. Production system (1) as in one of the previous claims, **characterised by** the at least first coupling element (18) and the at least second coupling element (19) forming a mechanically constructed coupling device when in the coupled position.

5. Production system (1) as in one of the previous claims, **characterised by** the at least one bending tool (11) held on the tool sockets (9, 10) defining a work plane (20) oriented in the vertical direction and extending in the longitudinal direction of the tool sockets (9, 10) and the multiple second coupling elements (19) arranged next to each other or the at least one coupling rail being arranged at an equal distance (21) in the perpendicular direction relative to the work plane (20).

6. Production system (1) as in one of the previous claims, **characterised by** the at least one manipulation device (13) being arranged in the region of a front side of the at least one bending machine (4) when in a machine operating position.

7. Production system (1) as in one of the previous claims, **characterised by** the at least one manipulation device (13) being connected to an energy supply line (22) arranged on the at least one bending machine (4) when in a machine operating position.

8. Production system (1) as in one of the previous claims, **characterised by** the at least one manipulation device (13) being connected to a data link (23) to a machine control and/or a production planning system arranged on the at least one bending machine (4) when in a machine operating position.

9. Production system (1) as in one of the previous claims, **characterised by** the at least one manipulation device (13) comprising a computing unit and/or a storage unit.

10. Production system (1) as in one of the previous claims, **characterised by** the at least one manipulation device (13) comprising a gripping arm (16) with at least one gripping organ (17), which at least one gripping organ (17) can be connected to the at least one bending tool (11), in particular its bending punch or bending die.

11. Production system (1) as in claim 10, **characterised by** the gripping arm (16) with its at least one gripping organ (17) being able to be brought into a position clamping the sheet metal (2) or plate.

12. Production system (1) as in one of the previous claims, **characterised by** the at least one manipulation device (13) having a temporary store (15) arranged or constructed on it for the at least one bending tool (11).

13. Production system (1) as in one of the previous claims, **characterised by** the at least one manipulation device (13) having at least one first storage surface (27) arranged or constructed on it for the sheet metal (2) or plates.

14. Production system (1) as in one of the previous claims, **characterised by** the at least one manipulation device (13) having at least one second storage surface (28) arranged or constructed on it for the completed work pieces (3).

15. Production system (1) as in one of the previous claims, **characterised by** the at least one manipulation device (13) being equipped with at least one optical capture device (29).

16. Production system (1) as in one of the previous claims, **characterised by** the at least one tool store (12) being distanced and spatially separated from the at least one bending machine (4).

17. Production system (1) as in one of the previous claims, **characterised by** comprising at least one raw material store (24) for the sheet metal (2) or plates to be bent, which raw material store (24) is preferably distanced and spatially separated from the at least one bending machine (4).

18. Production system (1) as in one of the previous claims, **characterised by** comprising at least one work piece store (25) for work pieces (3) produced from the sheet metal (2) or plates, which work piece store (25) is preferably distanced and spatially separated from the at least one bending machine (4).

19. Production system (1) as in one of the previous claims, **characterised by** the existence of a contactless guide for the travelling movement of the at least one manipulation device (13) between the at least one tool store (12) and the at least one bending machine (4) or between the raw material store (24) and/or the work piece store (25) and the at least one bending machine (4) of the at least one manipulation device (13) along the transport paths (14).

20. Production system (1) as in claim 19, **characterised by** the contactless guide being chosen from the group of induction strips, magnetic strips, longitudinal stripes or inked ribbons and optical detection thereof, GPS navigation, D-GPS navigation, laser navigation, data matrix code.

## Revendications

1. Installation de fabrication (1), plus particulièrement pour le cintrage à formes libres de pièces (3) à fabriquer à partir tôle (2) ou de platines, comprenant au moins un outil de cintrage (11), lequel au moins un outil de cintrage (11) comprenant au moins un poinçon de cintrage et au moins une matrice de cintrage ; au moins un magasin d'outils (12) pour plusieurs outils de cintrage (11) ; au moins une machine de cintrage (4), plus particulièrement une presse de cintrage, avec un châssis de machine (6) et des barres de pressage (7, 8) ainsi que des logements d'outils (9, 10) disposés ou réalisés sur chacune des barres de pressage (7, 8), pour l'au moins un outil de cintrage (11) ; au moins un dispositif de manipulation (13) au moyen duquel l'au moins un outil de cintrage (11) est mise, par un déplacement effectué par le dispositif de manipulation (13), d'une position de stockage d'outil se trouvant au niveau du magasin d'outils (12) le long d'un trajet de transport (14), vers au moins une position de commande de machine se trouvant au niveau de la machine de cintrage (4) entre le magasin d'outils (12) et la machine de cintrage (4), plus particulièrement ses logements d'outils (9, 10) ; **caractérisé en ce que**, sur l'au moins un dispositif de manipulation (13), au moins un premier élément de couplage (18) est disposé ou réalisé et sur l'au moins une machine de cintrage (4), au moins un deuxième élément de couplage (19) est disposé ou réalisé et **en ce que** l'au moins un dispositif de manipulation (13), lorsque celui-ci est dans une position se trouvant dans une des positions de commandes de la machine, l'au moins un premier élément de couplage (18) du dispositif de manipulation (13) est couplé avec au moins un des deuxièmes éléments de couplage (19) de la machine de cintrage (4) et l'au moins un dispositif de manipulation (13) est positionné de manière fixe par rapport à l'au moins une machine de cintrage (4) et une position de référence est donc déterminée.

2. Installation de fabrication (1) selon la revendication 1, **caractérisée en ce que**, sur la machine de cintrage (4), sont prévus plusieurs deuxièmes éléments de couplage (19) disposés les uns à côté des autres.

3. Installation de fabrication (1) selon la revendication 1 ou 2, **caractérisée en ce que** le deuxième élément de couplage (19) prévu sur la machine de cintrage (4) est constitué d'au moins un rail de couplage.

4. Installation de fabrication (1) selon l'une des revendications précédentes, **caractérisée en ce que** l'au moins un premier élément de couplage (18) et l'au moins un deuxième élément de couplage (19) forment, dans la position couplée entre eux, un dispositif de couplage mécanique.

5. Installation de fabrication (1) selon l'une des revendications précédentes, **caractérisée en ce qu'**au moins un outil de cintrage (11) maintenu au niveau des logements d'outils (9, 10) définit un plan de travail (20) orienté dans la direction verticale et s'étendant dans la direction longitudinale des logements d'outils (9, 10) et les plusieurs deuxièmes éléments de couplage (19) juxtaposés ou l'au moins un rail de couplage sont ou est disposé(s) à la même distance (21), dans la direction perpendiculaire, par rapport au plan de travail (20).

6. Installation de fabrication (1) selon l'une des revendications précédentes, **caractérisée en ce que** l'au moins un dispositif de manipulation (13) est disposé à une position se trouvant dans une des positions de commande de la machine au niveau d'un côté avant de l'au moins une machine de cintrage (4).

7. Installation de fabrication (1) selon l'une des revendications précédentes, **caractérisée en ce que** l'au moins un dispositif de manipulation (13) est relié, dans une position se trouvant dans une des positions de commande de la machine, avec un câble d'alimentation en énergie (22) disposé au niveau de l'au moins une machine de cintrage (4).

8. Installation de fabrication (1) selon l'une des revendications précédentes, **caractérisée en ce que** l'au moins un dispositif de manipulation (13) est relié, dans une position se trouvant dans une des positions de commande de la machine, avec un câble de données (23) disposé au niveau de l'au moins une machine de cintrage (4), avec une commande de machine et/ou un système de planification de production.

9. Installation de fabrication (1) selon l'une des revendications précédentes, **caractérisée en ce que** l'au moins un dispositif de manipulation (13) comprend une unité informatique et/ou une unité de mémoire.

10. Installation de fabrication (1) selon l'une des revendications précédentes, **caractérisée en ce que** l'au moins un dispositif de manipulation (13) comprend un bras de préhension (16) avec au moins un organe de préhension (17), lequel au moins un organe de préhension (17) pouvant être mis en liaison de maintien avec l'au moins un outil de cintrage (11), plus particulièrement son poinçon de cintrage ou sa matrice de cintrage.

11. Installation de fabrication (1) selon la revendication 10, **caractérisée en ce que** le bras de préhension (16) peut être mis, avec son au moins un organe de préhension (17), dans un support serrant la tôle (2) ou la platine.

12. Installation de fabrication (1) selon l'une des revendications précédentes, **caractérisée en ce que**, sur l'au moins un dispositif de manipulation (13), est disposé ou réalisé un magasin intermédiaire (15) pour l'au moins un outil de cintrage (11).

13. Installation de fabrication (1) selon l'une des revendications précédentes, **caractérisée en ce que**, sur l'au moins un dispositif de manipulation (13), est disposée ou réalisée au moins une première surface de palier (27) pour la ou les tôles (2) ou les platines.

14. Installation de fabrication (1) selon l'une des revendications précédentes, **caractérisée en ce que**, sur l'au moins un dispositif de manipulation (13), est disposée ou réalisée au moins une deuxième surface de palier (28) pour la ou les pièces (3) fabriquées.

15. Installation de fabrication (1) selon l'une des revendications précédentes, **caractérisée en ce que** l'au moins un dispositif de manipulation (13) est muni d'au moins un dispositif de mesure optique (29).

16. Installation de fabrication (1) selon l'une des revendications précédentes, **caractérisée en ce que** l'au moins un magasin d'outils (12) est disposé à distance et séparé physiquement de l'au moins une machine de cintrage (4).

17. Installation de fabrication (1) selon l'une des revendications précédentes, **caractérisée en ce que** celle-ci comprend au moins un stockage de matière première (24) pour les tôles (2) ou platines à cintrer, lequel stockage de matière première (24) étant de préférence disposé à distance et séparé physiquement de l'au moins une machine de cintrage (4).

18. Installation de fabrication (1) selon l'une des revendications précédentes, **caractérisée en ce que** celle-ci comprend au moins un stockage de pièces (25) pour les pièces (3) fabriquées à partir des tôles (2) ou des platines, lequel stockage de pièces (25) étant de préférence disposé à distance et séparé physiquement de l'au moins une machine de cintrage (4).

19. Installation de fabrication (1) selon l'une des revendications précédentes, **caractérisée en ce que**, pour le déplacement de l'au moins un dispositif de manipulation (13) entre l'au moins un magasin d'outils (12) et l'au moins une machine de cintrage (4) ou entre le stockage de matière première (24) et/ou le stockage de pièces (25) et l'au moins une machine de cintrage (4) un guidage sans contact de l'au moins un dispositif de manipulation (13) a lieu le long des trajets de transport (14).

20. Installation de fabrication (1) selon la revendication 19, **caractérisée en ce que** le guidage sans contact est sélectionné dans le groupe constitué de bandes d'induction, de bandes magnétiques, de bandes longitudinales ou de bandes de couleurs, et de leur détection optique, navigation GPS, navigation D-GPS, navigation par laser, code matriciel de données.
